# EUROPEAN PATENT APPLICATION

(11) **EP 3 680 095 A1**
(43) Date of publication of application: **15.07.2020**
(21) Application number: 19151533.7
(22) Date of filing: 12.01.2019
(51) Int. Cl.: B32B 5/18, C08J 9/00, C08J 9/36, C08G 18/38

(54) **INSULATION PANEL**

(71) Applicant: HEKA graphit.technology GmbH, 19288 Ludwigslust (DE)
(72) Inventor: The designation of the inventor has not yet been filed
(74) Representative: Reitstötter Kinzebach

(57) **Abstract**

The present invention concerns an insulation panel comprising at least one insulation layer comprising a foam made from a foaming first siliceous-based polyurea composition obtained by reacting ingredients comprising a polyisocyanate and an aqueous silicate, and a stabilizing material. The insulation panel is preferably further provided with an active thermal layer, such as an active heating or cooling layer.

## Description

The present invention relates to insulation panels which provide for good thermal insulation and which act also as fire barriers. The invention also relates to insulation panels and panel arrangements made from these compositions as well as to methods of forming such panels and panel arrangements.

It is known that insulation panels made from polymer foams provide good thermal insulation and are widely used as building components in construction industry. For examples, foamed plastic materials are used for insulating purposes in building structures such as exterior or partition walls, bulkheads, ceilings, floors, storage tanks and roof structures. Typically, such insulation panels are based on a rigid polyurethane/polyisocyanurate (PU/PIR) foam. Organic polyisocyanates and water react together with the production of polymers of which the structural units are linked together by urea linkages. A byproduct of that reaction is carbon dioxide which may cause foaming of the composition. Polyurethane and polyisocyanurate foams are known for their particularly good insulating efficiency, especially when the foam cells are predominantly closed, especially if more than 80% or more than 85% are closed cells. In certain applications, the cells contain not only carbon dioxide, which is produced by the reaction of the isocyanate with the chemical blowing agent (for instance, water), but also a physical blowing agent such as one of the hydrocarbon, hydrofluorocarbon, or hyrochlorofluorocarbon agents which can be employed in the manufacturing process. Such panels are commercially available in various sizes and can be joined together to larger panel arrangements, often by sealing the lateral joints between the pals with flexible foam gaskets.

The PU/PIR foams are typically combustible but leave little carbonaceous residues on burning. However, such panels have only limited structural integrity under fire conditions. In order to increase the structural integrity to prolong building stability and to maintain barriers to the passage of heat, smoke and fire, such panels are usually made with a polymer foam core provided with external metal layers, for instance of steel or aluminum.

It is also known to increase the performance of insulating panels by incorporating flame retardant additives in the foam and/or by using thick external layers made from an incombustible material such as gypsum.

Recent fire disasters such as the Grenfell tower fire in June 2017 in London have shown that in the case of a fire, buildings provided cladding/insulation material made from combustible polymers pose a dramatically increased risks for the lives their inhabitants.

Therefore, there is a need for improved construction materials on a polymer basis which allow the manufacturing of insulation panels which are much less prone to risks in case of fire.

This technical problem is solved by the construction material of the present invention and the insulation panels made from such material. It was surprisingly found that this technical problem can be solved by using two-phase polyurea silicate systems (PUS) for the construction of insulation panels.

Accordingly, the insulation panel of the present invention comprises at least one insulation layer comprising a foam made from a foaming first siliceous-based polyurea composition obtained by reacting ingredients comprising a polyisocyanate and an aqueous silicate, and a stabilizing material.

Two-phase polyurea silicate systems (PUS) are known in the art. By variation of the nature and relative proportions of the reactants and the reaction conditions, solid products of differing physical characteristics maybe obtained. For example, one may obtain a reaction product having the consistency of a putty, or alternatively a hard dense mass or, yet again, a low density cellular structure or a product in any physical state between the foregoing states. The mixing ratio of the organic and inorganic components can determine which liquid forms the continuous phase.

Such construction materials are commercialized for instance by BASF SE, Germany, under the brand name "MasterRoc®". These siliceous-based polyurea compositions are usually obtained by reacting ingredients comprising a polyisocyanate and an aqueous silicate. The reaction ingredients can further comprise a polyol and/or inert fillers.

It is known that the foam characteristics of the resulting insulation material can be varied by the amount of aqueous silicates used in the composition. If high amounts of aqueous silicates are used, all of the carbon dioxide generated from the reaction of polyisocyanate with water tends to be used up by the silicate component for hydrated silica precipitation and the reaction mixture will thus not foam. A typical non-foaming two-component polyurea silicate resin is commercialized by BASF SE under the trade name "MasterRoc® MP 368". On the other hand, when small amounts of aqueous silicates are used, light-weight foam materials are obtained. Such foaming compositions are commercialized by BASF SE under the trade name "MasterRoc® MP 367". These compositions are used for ground consolidation, especially void and cavity filling and consolidation of rocks in underground structures such as tunnels or coal mines. It has surprisingly been found that improved insulation panels can be manufactured from these materials.

The panel structures obtained by the non-foaming composition are generally more rigid than the panel structures obtained by the foaming material. Therefore, in a preferred embodiment, the non-foaming two-component polyurea silicate resin can act as a stabilizing material within the layer obtained from the foaming material. Accordingly, in a preferred embodiment, the stabilizing material of the insulation panel according to the invention comprises a resin obtained from a non-foaming second siliceous-based polyurea compositions obtained by reacting ingredients comprising a polyisocyanate and an aqueous silicate, wherein said non-foaming second siliceous-based polyurea has a higher concentration of said aqueous silicate than said foaming first siliceous-based polyurea composition.

In a preferred embodiment, the insulation panel of the present invention is made as a composite material from a foaming polyurea silicate resin, such as MasterRoc® MP 367, and a non-foaming polyurea silicate resin such as MasterRoc® MP 368. Preferably, the foaming polyurea silicate resin forms a core region of the insulation panel while regions made of non-foaming polyurea silicate resin form reinforcement structures or attachment points of the insulation panel. Therefore, the non-foaming polyurea silicate resin preferably forms edge regions of the insulation panel, for example, edge regions which are configured in a tongue and groove configuration to allow assembly of insulation panels of the invention to larger panel arrangements. In other embodiments, the non-foaming polyurea silicate resin is arranged like a skeleton-structure within the polyurea silicate foam.

The polyisocyanate according to the present invention is an aliphatic isocyanate, an aromatic isocyanate or a combined aliphatic/aromatic isocyanate, having an -NCO functionality of preferably > 2. Suitable polyisocyanates include tetramethylene diisocyanate, hexamethylene diisocyanate (HMDI), dodecamethylene diisocyanate, 3-isocyanatomethyl-3,5,5-trimethyl- cyclohexyl isocyanate, i.e. isophorone diisocyanate (IPDI), 4,4'-dicyclohexylmethane diisocyanate (H12MDI), 1 ,4-cyclohexane diisocyanate (CHDI), 4,4'-diisocyanatodicyclo- hexyl-2,2-propane, p-phenylene diisocyanate, 2,4- and 2,6-toluene diisocyanate (TDI) or mixtures thereof, tolidine diisocyanate, 2,2'-, 2,4'- and 4,4'-diphenylmethane diisocyanate (MDI) or mixtures thereof, 1 ,2-naphthylene diisocyanate, xylylene diisocyanate, tetramethylxylene diisocyanate (TMXDI), and mixtures thereof. Diphenylmethane diisocyanate (MDI) or polymeric diphenylmethane diisocyanate (PMDI) and mixtures thereof are particularly preferred.

The commercially available aqueous alkali metal silicates have been found to give satisfactory results. Such silicates can be represented as M₂O.SiO₂, where M represents an atom of an alkali metal and they differ in the ratio of M₂O:SiO₂. It has been found that the sodium silicates are highly satisfactory and while the other alkali metal silicates, e.g. potassium and lithium silicates may be used they are less preferable on economic grounds. Using the preferred sodium silicate, the M₂O:SiO₂ratio may vary, for example from 1.6:1.0 to 3.3:l.0. However it is found generally to be preferable to employ a silicate of which the said ratio is within the range 20:10 to 2.3:1.0.

In addition to or alternative to the non-foaming polyurea silicate resin, other stabilizing materials can be integrated within the layer of polyurea silicate resin foam. In one embodiment, the stabilizing material comprises two-dimensional or three-dimensional fabrics made of glass, carbon, basalt and aramid fibres. Such fabrics are, for instance, commercialized under the tradename SITgrid® by company "V.FRAAS Solutions in Textile GmbH", Helmbrechts, Germany.

Known three-dimensional fabrics suffer, however, from the drawback that the panels have to maintain an essentially flat configuration. In many applications, for instance concerning insulation panels for trains or busses, the panels have to attain a curved configuration. Thus, according to the present invention, insulation panels can be employed which achieve a curved configuration by using a three-dimensional stabilizing material obtained from two two-dimensional fabrics made of glass, carbon, basalt and aramid fibres, spaced apparat by patches of non-foaming polyurea silicate resin. These three-dimensional stabilizing materials can easily be arranged in complex curved configurations. The final configuration is then foamed with a foaming polyurea silicate resin thus obtaining the final insulation panel.

Other preferred stabilizing materials include endless glass fabrics obtained by felting an endless glass fibric thread into a pillow-like form which is then filled with the foam of the present invention to create high-strength planar structures. Structural stability can also be improved by incorporating glass fibers or basalt rods. In other embodiments, metallic profiles, such as aluminium profiles, can also be included in the insulation panel.

The filler materials may be organic or inorganic, fibrous or particulate, or mixtures of any of these, such as sand, alumina, aluminosilicates, magnesia, and other particulate refractories; metal fibers, asbestos, glass fiber, rock wool, aluminosilicate, calcium silicate fibers and other fibrous refractories; wood flour, coke and other organic or carbonaceous particles; paper pulp, cotton waste, cotton, jute, sisal, hemp, flax, rayon, or synthetic fibers such as polyester, polyamide and acrylonitrile fibers and other organic fibrous materials. In a preferred embodiment, the insulation material further comprises a filler material, for instance, an inorganic filler material such as glass microbeads. The filler material does not only increase structural stability but also provides for an increased thermal insulation capability. The filler material can comprise microspheres in different sizes and can also comprise solid or hollow microspheres. In other embodiments, the filler material comprises inorganic granules and/or fibers, for instance, made from silicon dioxide. For instance, commercially available silicon dioxide granules, usually commercialized as "cat litter", can also be included.

In other embodiments, the stabilizing materials comprise three-dimensional fabrics arranged on one or both sides (e.g. planar faces) of the insulation layer. The three-dimensional fabrics are preferably made from an inorganic material or from a carbon material, for instance from a ceramic material or from glass, carbon, basalt and aramid fibers.

In one embodiment, the insulation panel according to the invention comprises at least one active thermal layer applied to the insulation layer. An active thermal layer is a layer which is to be understood as a layer can assume a different temperature than its environment, for instance by introduction of electrical energy which is converted into a heated or cooled surface of the thermal layer or by actively or passively circulating a cooling fluid such as water or air through a structure of the active thermal layer.

In a further embodiment of the invention, the insulating layer of the insulation panel of the invention can be made from a different material than the material described in the embodiments described above. Accordingly, in one embodiment, the insulation panel comprises at least one insulation layer comprising a rigid foam made from a polystyrene composition and a stabilizing material, and an active thermal layer applied to the insulation layer. The same stabilizing materials as described above can be used in the this embodiment.

In all embodiments of the invention, the active thermal layer can comprise an electrical heating and/or electrical cooling element.

The electrical heating and/or cooling element can, for instance comprises one or more electrically conductive layers such as metal sheets or metal meshes, e.g. silver of copper sheets or meshes.

In one embodiment, electrically conductive layers of the insulation panel comprise one or more layers made from a two-dimensional semi-conductor. For instance graphene layers or graphite/graphene layers can be used to establish a two-dimensional semi-conductor layer.

In one embodiment, the electrically conductive layers comprise one or more layers of an electrically conductive particulate material (powder, fiber or granules), for instance graphite, dispersed in a binder, preferably an acrylate binder, comprising from 30 to 95 %by weight graphite and from, 4 to % by weight binder and from 0 to 40 % by weight functional additives. Suitable compositions are described in detail in applicant's international patent application WO 2016/087673 A1. By suitable adjusting the ratio of conductive particulate material to binder, the electrical, thermal and radiation absorbing/reflection properties of the layer can be varied.

In one embodiment, the electrical heating and/or cooling element is arranged in a layered structure forming a Peltier element which can, for instance be obtained by sandwiching said layer of an electrically conductive particulate material between two metal plates or foils or between two carbon sheets or foils or between a metal plate or foil or a carbon plate or foil. The external metal plate or foil represents the active thermal surface which, depending on current polarity, is cooled or heated, while the inner metal plate or foil attached to the insulation layer represents the heat exchange surface where heat has to be removed or provided via suitable heating or cooling media.

When Peltier elements are used, the panel should be provided with the following layers: The insulating panel is provided with a first insulating layer made from aluminium oxide. On the aluminium oxide layer, an electrically conductive layer is applied, for instance made from a metal mesh. Subsequently, a layer (for instance a 2 mm thick layer) of electrically/thermally conductive filler/plaster material is applied which is configured to exhibit the characteristics of a semi-conductor. A subsequent electrically conductive layer can be again made from a metal mesh. Finally, an external layer of aluminium oxide is provided.

In certain embodiments, modified insulation panels can comprise water cooling, e.g., a system for water circulation and/or Peltier-elements. In a simple embodiment, the panel comprises grooves, for instance in a meandering pattern, allowing to insert PVC pipe elements. To obtain a high heat transfer rate, the pipe elements can be covered with a thermally conductive material such as a thermoconductive filler. Thus, the active thermal layer can comprises tubes for a cooling fluid arranged in grooves provided on a surface of said at least one insulation layer and a thermally conductive plate arranged on said grooves, the thermally conductive plate being in thermal contact with said tubes.

In a preferred embodiment of the present invention, the insulation panels are provided with a tapering edge allowing abutting edges of neighboring panels to be filled and leveled with a suitable plaster or filler material. Moreover, to increase structural stability, a stabilizing tissue material can be incorporated in the area of abutting edges.

Accordingly, in one embodiment, the insulating panels of the present invention can be provided with an electrically conductive layer and suitable electrical contacts for passing an electrical current through the electrically conductive layer.

Cables, metal meshes or metal forms can be incorporated, for instance in form of strips, in corresponding cavities provided in the insulation panel.

The insulation panel can also include additional equipment such as temperature sensors, safety switches, for instance, bi-metallic safety switches, and corresponding cables.

Once all elements are integrated, a conductive layer is applied. This can either consist of a modified electrically conductive plastering or filling material which will subsequently be dried. Alternatively, other formulations such as UV-durable binders, e.g., based on palm oil or polyaniline can be employed. For instance, a palm oil-based polyester binder can be synthesized and blended with polyaniline and formulated with maleic acid to obtain a UV-durable binder. Such an electrically conductive layer represents a heating surface of the insulation panel.

The panel can finally be provided with a plaster/filling layer, for instance consisting of a gypsum/cement layer. The heating layer can include materials having a high heat conductivity, for instance, aluminum oxide or borosilicate, or the like.

Panels can also comprise integrated cameras to create sensors for personalized heating/cooling or voice recognition sensors, or sensors to sense mobile phones, smart phones, RFID-chips, etc. allowing to identify a user and to adapted heating and/or cooling condition to personalized user profile.

In electrical vehicles, the insulation panel of the present invention can, for instance, be used for internal linings as radiant heaters avoiding conventional ventilation heating. The panel can be obtained by using a suitable mold, inserting the components for increasing structural stability into the mold and pressing an appropriate amount of foam material into the mold and allowing the foam to solidify.

The inner form of the mold can be provided with various grooves and ribs for structuring the insulation panel, allowing, for instance, to define areas for cable management, measuring points, introduction of surface meshes or electrically conducting plaster or filler, etc.

The invention will now be described in more detail making reference to certain preferred embodiments described in the accompanying drawings.

In the drawings:
- Fig. 1: shows a schematic first embodiment of the insulation panel of the present invention, comprising a heating layer;
- Fig. 2: shows various embodiments of the edge geometry of the insulation panels of the present invention allowing to join several insulation panels together to large arrangements;
- Fig. 3: shows an alternative embodiment for joining insulation panels of the present invention;
- Fig. 4: shows a further embodiment of the insulation panel of the present invention; and
- Fig. 5: shows a cross-sectional view of an insulation panel of the present invention, where the active heating layer is configured as a Peltier-element.

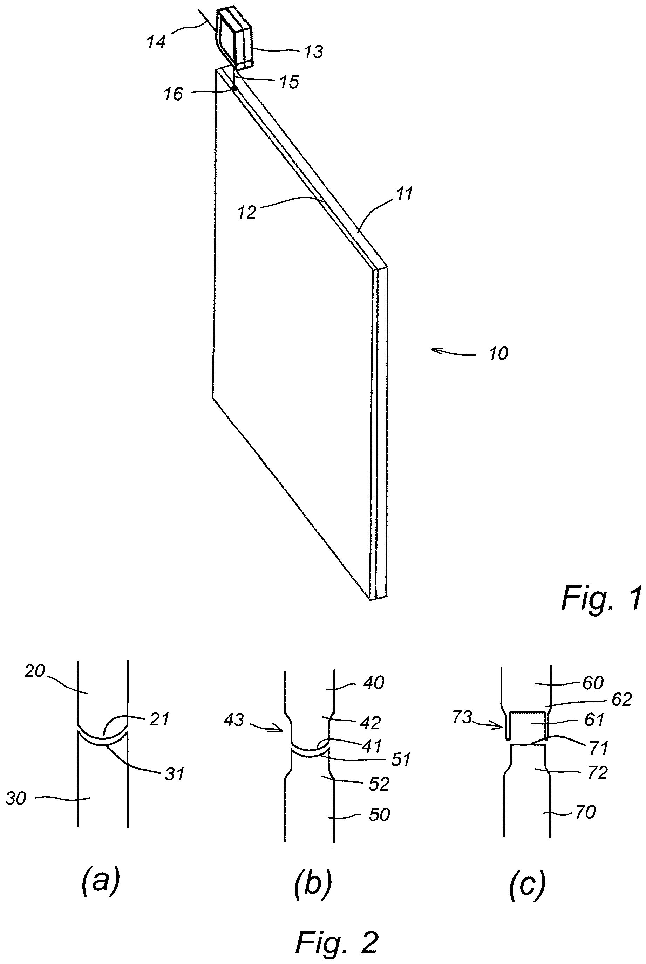

The insulation panel 10 shown in Fig. 1 comprises an insulation layer 11 made from forming a silicious-based polyurea composition by reacting polyisocyanide components with aqueous silicate components. In the present example, the insulation layer is approximately 2 cm thick. In order to obtain a heatable panel, the insulation layer 11 is coated with an active thermal layer 12, which in the present case is obtained by coating a 2 mm thick layer of a particulate graphite material dispersed in an acrylate binder onto the insulation layer. A heating effect is generated by passing electrical current through the active thermal layer. To this effect, a control element 13 is provided, which receives current via a power line 14 from a (non-depicted) power source and is electrically connected to the active thermal layer 12 via cable 15 attached to an electrical contact 16 to deliver a pre-selected amount of current to the active thermal layer 12. The resistance of the active thermal layer is governed by the concentration of the electrically conductive ingredient, in this the particulate graphite material. The resulting resistance determines the amount of electrical energy injected, which is converted into thermal heat. In order to complete the electrical circuit, a (non-depicted) return line to the ground or to the power source has also to be provided. In other embodiments, the insulation panel comprises electrical contacts arranged on one or more of its edges to pass a current to neighboring insulation panels.

Usually, several insulation panels will be combined into a larger arrangement. Fig. 2 shows in Figures 2a, 2b and 2c various embodiments of suitable edge geometry allowing neighboring panels to be assembled together. In Fig. 2a, two adjacent insulation panels 20, 30 are provided with convexly rounded edges 21 and concavely rounded edges 31, respectively. Fig. 2b shows a similar arrangement as Fig. 2a, wherein the neighboring panels 40, 50 are provided with convexly rounded edges 41 and concavely rounded edges 51, but are further provided with tapering edges regions 42, 52, so that recesses 43, 53 are formed at the abutting area of neighboring insulation panels 40, 50. These recesses 43, 53 can be filled with a suitable plaster or filler material, which will usually be applied to level with the external planar surfaces of the panels 40, 50. Fig. 2c shows a typical tongue-end groove arrangement, where one edge of an insulation panel 60 is provided with a groove 61 and the other insulation panel 70 with a tongue 71. Upon assembly, the tongue 71 fits into the groove 61 provided at the edge of the neighboring insulation panels 60, 70. Similar to the embodiments of Figures 2a and 2b, the embodiment of Fig. 2c can be provided with tapering edges 62, 72 to form a recess 63, 73 (as shown) or with non-tapering edges (not shown).

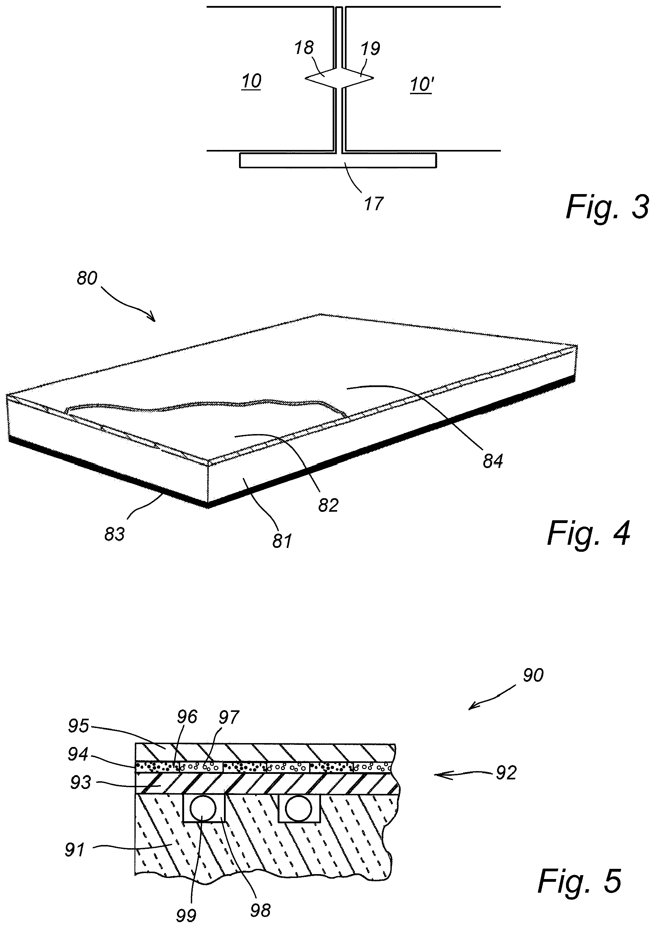

Fig. 3 shows an alternative embodiment for joining insulation panels of the present invention. In this embodiment, two insulation panels 10, 10' are joint using a plastic T-shaped connector 17 having two spikes 18, 19 which can be inserted into the respective panels 10, 10'. As a matter of course, other connectors can easily be envisioned. For instance, connectors can be employed which comprise metallic elements for establishing an electrical connection between adjacent panels.

Fig. 4 shows a further alternative embodiment of the insulation panel 10 depicted in Fig. 1. In the embodiment of Fig. 4, the insulation panel 80 also provided with a an insulation layer 81, one side of which is coated with a thermally active layer 82. Further, on the opposite side of the insulation layer 81, a backing layer 83 is arranged which does not only provide additional structural stability to panel 10 can also be used to mounting purposes and the like. The backing layer can be made from any suitably rigid plastic, metal or ceramic material and can assume any configuration such as plates, grids, etc. The front surface of the insulation panel 80 is covered with a finish 84 such as a rendering base/plaster base on which, for instance, suitable mineral plasters or fillers can be applied.

Fig. 5 depicts an embodiment of the present invention, in which the insolation panel 90 is provided with a thermoelectric cooler/heater layer 92 which is applied onto the insulation layer 91. It is known that electrical cooling/heating effects can be obtained by arranging p- and n-type semiconductors between two metal plates, using the Peltier-effect to create a heat flux between the junctions of the two different types of semiconductor materials. When passing current through a thermoelectric cooler, heat is transferred from one side of the sandwich-structure to the other, depending on the polarity of the applied electrical current. In the context of the present invention, the thermoelectric cooler/heater (i.e. Peltier-element) consists of a metallic internal layer 93, arranged directly or via intermediate layers on the insulation layer 91, a graphite-/graphene-based interlayer layer 94, which exhibits semiconductor properties, and an external metallic layer 95, which provides the external, thermally active surface of the heating/cooling element.

The graphite-/graphene-based interlayer layer 94 is structured into alternating regions 96, 97 exhibiting n-type and p-type semiconductor characteristics, respectively. This can be achieved by suitably selecting the conductive particulate material, the binder material and optionally included dopants. In Fig. 5, n-type regions 96 are symbolized by closed-circle particulates and p-type regions 97 are symbolized by open-circle particulates.

When acting as a cooling element, heat transferred to the inner metallic layer 93 must be removed, so that it is preferred that a suitable cooling circuit is provided. To this effect, grooves 98 are provided on the upper surface of the insulation layer 91, in which cooling tubes 99 in which a suitable cooling medium, such as water, can be circulated. The cooling tubes are in thermal contact with the inner surface of the inner metallic layer 93. Alternatively, passive or forced air cooling can be employed.

Likewise, under opposite different electrical polarity, heat may be supplied to via tubes 99 the inner metallic layer 93 which is cooled when the outer metallic layer 95 acts as a heating element.

Insulation panels according to the invention can also be made from combinations of Betol K 42 T (inorganic binder based on an aqueous solution of potassium silicate commercialized by Wöllner GmbH, Ludwigshafen, Germany) and Master Roc 367 Foam Part B (BASF). Other suitable compositions include Betol K 5020 T (Woellner) and Master Roc 367 Foam Part B.

However other compositions than Master Roc compositions can also be used. For instance, panels have been made from a mixture of Betol K5020T , water glass as binder, with the addition of Fabutit 748 (Chemische Fabrik Budenheim KG, Buddenheim, Germany) as hardener and Warofoam 720 (Wollner) as defoamer. Hollow spheres (Poraver) were used as filling material. In all variants 3-D-fabric (Fraas) was used. In order to further stiffen this fabric, bars of basalt were additionally inserted into the fabric. These allow a higher stiffness of easily manageable panels having a length of 2.7m.

Moreover, a mixture of hollow spheres, cement, water and Contopp foaming agent SFS 3 could also be used to produce a insulation panels comprising a 3-D fabric and basalt rods.

Fabric having for instance a power consumption as low as 5 W to yield a temperature of 40 °C can be used.

Additional applications of the insulation panels can be contemplated: For instance, as free-hanging panels, spheres, cubes, oval tubes or in other forms, free-hanging "radiators" can also be used to significantly improve room acoustics thanks to their outstanding acoustic properties. The heating surface can be applied on all sides, including the interior of the tubes or other hollow forms. Through the additional use of ionization modules, such hollow forms can also achieve health benefits. Illumination means can also be incorporated.

The insulation panels of the invention can be employed as office partition walls. They have excellent acoustic properties and are able to heat the working areas more directly, thus saving energy. Shielding properties against electromagnetic radiation can also be incorporated.

## Claims

1. Insulation panel comprising
at least one insulation layer comprising a foam made from a foaming first siliceous-based polyurea composition obtained by reacting ingredients comprising a polyisocyanate and an aqueous silicate, and a stabilizing material.

2. Insulation panel according to claim 1, wherein said stabilizing material comprises a resin obtained from a non-foaming second siliceous-based polyurea compositions obtained by reacting ingredients comprising a polyisocyanate and an aqueous silicate, wherein said non-foaming second siliceous-based polyurea has a higher concentration of said aqueous silicate than said foaming first siliceous-based polyurea composition.

3. Insulation panel according to one of claims 1 or 2, wherein said stabilizing material comprises two-dimensional or three-dimensional fabrics made of glass, carbon, basalt and aramid fibers.

4. Insulation panel according to one of claims 1 to 3, wherein said at least one insulation layer comprises an inorganic filler material.

5. Insulation panel according to claim 4, wherein said inorganic filler material is selected from one ore more of silicon-dioxide mircosheres, granules or fibers.

6. Insulation panel according to any one of claims 1 to 5 comprising at least one active thermal layer.

7. Insulation panel comprising
at least one insulation layer comprising a rigid foam made from a polystyrene composition and a stabilizing material,
and an active thermal layer.

8. Insulation panel according to one of claims 6 or 7, wherein said active thermal layer comprises an electrical heating and/or electrical cooling element.

9. Insulation panel according to claim 8, wherein said electrical heating and/or cooling element comprises one or more electrically conductive layers.

10. Insulation panel according to claim 9, wherein said electrically conductive layers comprise one or more layers made from a metal sheet or metal mesh.

11. Insulation panel according to one of claims 9 or 10, wherein said electrically conductive layers comprise one or more layers made from a two-dimensional semi-conductor.

12. Insulation panel according to one of claims 9 to 11, wherein said electrically conductive layers comprise one or more layers of graphite dispersed in a binder, preferably an acrylate binder, comprising from 30 to 95 %by weight graphite and from, 4 to % by weight binder and from 0 to 40 % by weight functional additives.

13. Insulation panel according to claim 8, wherein said electrical heating and/or cooling element comprises a peltier element layer.

14. Insulation panel according to one of claims 6 to 13, wherein said active thermal layer comprises tubes for a cooling fluid arranged in grooves provided on a surface of said at least one insulation layer and a thermally conductive plate arranged on said grooves, the thermally conductive plate being in thermal contact with said tubes.
